# EUROPEAN PATENT APPLICATION

(11) **EP 2 210 759 A1**
(43) Date of publication of application: **28.07.2010**
(21) Application number: 10150407.4
(22) Date of filing: 11.01.2010
(51) Int. Cl.: B60K 6/48, B60K 6/12, B60K 25/02, B60K 25/10, F02D 17/02, F04B 27/12

(54) **Hybrid propulsion system, particularly for motor vehicles and boats**

(30) Priority: 19.01.2009 IT MI20090040
(71) Applicant: GM Oil & Gas Machinery S.r.l., 20033 Desio, MB (IT)
(72) Inventor: Mazzota, Giovanni, 20033 Desio MB (IT)
(74) Representative: Premru, Rok

(57) **Abstract**

A hybrid propulsion system is herein disclosed, particularly for motor vehicles and boats, comprising: an internal-combustion engine (2a) of the reciprocating type, having a number N of cylinders (31, 32) and a number N of pistons (41, 42); a compressed-air engine (2b) of the reciprocating type, having a number C of cylinders (33, 34) and a number C of pistons (43, 44); said compressed-air engine (2b) being in thermal connection with said internal-combustion engine (2a); a drive shaft (5), having said N pistons (41, 42) of said internal-combustion engine (2a) and said C pistons (43, 44) of said compressed-air engine (2b) connected thereto; an air compressor (6) adapted to generate a compressed air flow to be fed to said C cylinders (33, 34) of said compressed-air motor (2b), wherein said internal-combustion engine (2a) and said compressed-air engine (2b) are designed for simultaneous operation.

## Description

A hybrid propulsion system is herein disclosed, particularly for use in the automotive (for motor vehicles, trucks, buses, etc) and naval industries.

The use of internal-combustion engines in the field of transportation has been known for over a century.

In spite of the remarkable improvements that have been made over the years, internal-combustion engines still suffer from various drawbacks and cause a number of problems.

For example, exhaust gases of internal-combustion engines are one of the main sources of atmospheric pollution.

Several solutions have been proposed to obviate this problem.

For instance, DE 10 2005 022 961 B4 (Hentschel) discloses a hybrid propulsion engine that can alternately operate as an internal-combustion engine and as a compressed-air engine.

Compressed air may be obtained and compressed in multiple tanks through recovery of kinetic energy during deceleration.

For an internal-combustion engine to be adapted for operation as a compressed-air engine, Hentschel suggests of modifying the engine head, particularly by adding a compressed air inlet valve, and a heat exchanger to prevent the formation of ice.

This obviously increases engine manufacturing costs.

The object of this invention is to obviate at least some of the drawbacks of prior art internal-combustion engines and hybrid engines.

Particularly, one object of the inventor is to provide a solution to reduce the polluting emissions of internal-combustion engines.

Another object is to provide a propulsion system that can be manufactured with low investment costs.

Yet another object is to provide a solution that can improve energy efficiency.

The objects of the inventor are fulfilled by propulsion system as defined in claim 1.

Further advantages may be obtained by the additional features of the dependent claims.

A possible embodiment of the invention will be now described with reference to the accompanying drawings in which:
- Figure 1 is a schematic view of a hybrid propulsion system;

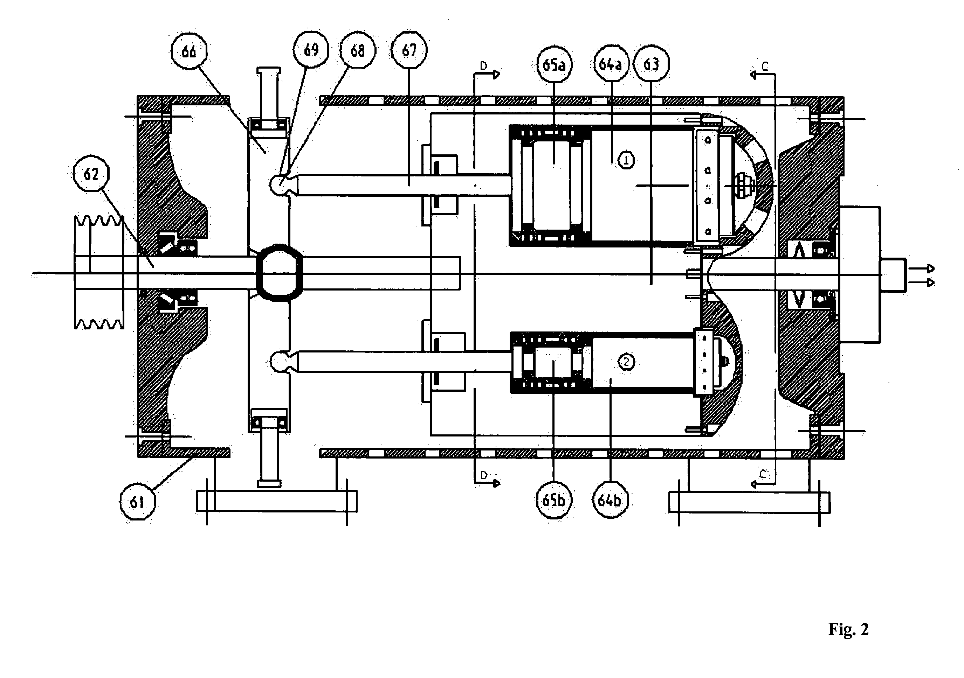

- Figure 2 is a longitudinal sectional view of an air compressor as used in the propulsion system of Figure 1;

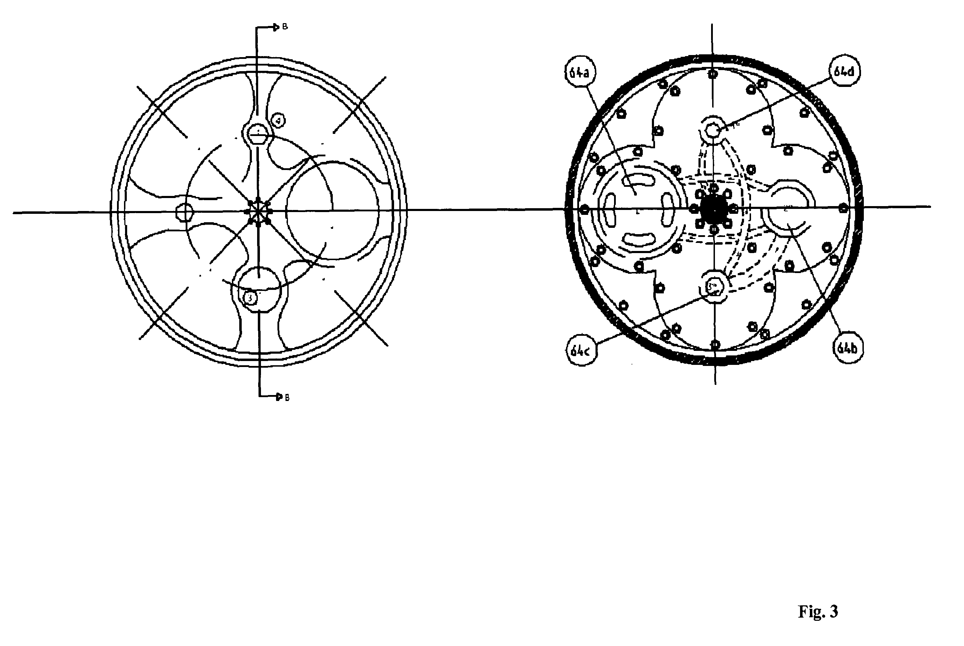

- Figure 3 is a cross sectional view of the compressor of of Figure 2.

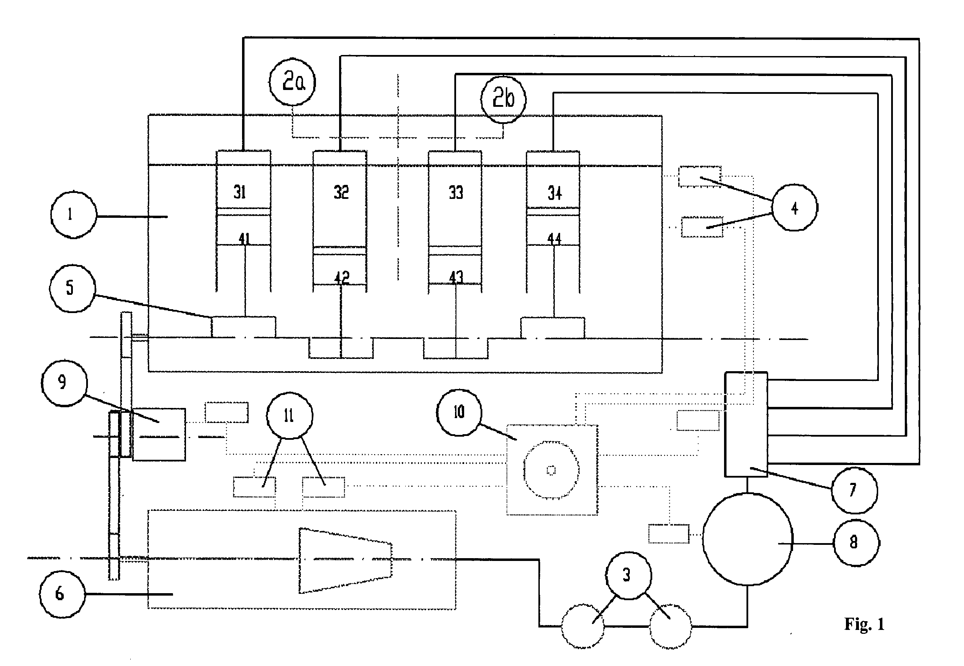

Referring to the accompanying drawings, Figure 1 schematically shows a hybrid propulsion system, particularly for motor vehicles, which comprises an internal-combustion engine 2a of the reciprocating type, typically an Otto or diesel engine, having a number N of cylinders 31, 32 and a number N of pistons 41, 42.

A compressed-air engine 2b of the reciprocating type is further provided, which has a number C of cylinders 33, 34 and a number C of pistons 43, 44.

Preferably, the compressed-air engine 2b is fed with an air flow at a pressure in a range from 0.5 to 200 bar, directly delivered from the compressor through a pulsation dampening tank 8.

In the embodiment as shown herein, two cylinders 31, 32 act as combustion chambers and two cylinders 33, 34 act as expansion chambers for compressed air; other solutions may be obviously provided.

The pistons 41, 42 of the internal-combustion engine 2a and the pistons 43, 44 of the compressed-air engine 2b are connected by a drive shaft 5 by crank gears (not shown).

The compressed air required to feed the compressed-air engine 2b is thus generated by the internal-combustion engine 2a.

In one possible embodiment, the cylinders 31, 32 of the internal-combustion engine 2a and the cylinders 33, 34 of the compressed-air engine 2b are formed into a single cylinder block, and the drive shaft 5 is a single crank shaft.

This solution is also preferred in that it allows the hybrid propulsion system to be obtained from a traditional internal-combustion engine, thereby limiting costs and sizes.

Any reader skilled in the art will appreciate that this solution allows the engine to be used as an internal-combustion engine and as a compressed-air engine at the same time, without making any change to the head.

Furthermore, this allows the compressed-air engine 2b to be in thermal connection with the internal-combustion engine 2a.

The high-pressure air generated in real time by the compressor may be injected at temperatures as high as 150/200°C.

Due to this feature, the heat generated by the internal-combustion engine 2a heats air during expansion in the cylinders 33, 34 of the internal-combustion engine, which would otherwise tend to be cooled.

This prevents the formation of ice in the engine, as well as any risk of obstruction of the compressed air flow caused by such formation of ice.

While the inventor does not intend to provide any scientific explanation, he nevertheless also believes that, due to the heat received from the cylinders 31, 32 of the internal-combustion engine 2a and to the direct injection of air heated by the compression cycle of the compressor, air is expanded within the cylinders 33, 34 of the compressed-air engine 2b in a substantially isothermal manner, and the performance of the compressed-air engine 2b is thus maximized.

In order to improve heat transfer between the cylinders 31, 32 of the internal-combustion engine 2a and the cylinders of the compressed-air engine 2b, the cylinders of the compressed-air engine may be alternated between the cylinders of the internal-combustion engine.

The inventor also suggests that the heat flow from the cylinders 31, 32 of the internal-combustion engine 2a, to the cylinders 33, 34 of the compressed-air engine 2b may allow recovery and conversion of part of the heat energy released by the internal-combustion engine 2a, which would be otherwise inevitably lost.

The cylinders 33, 34 of the compressed-air engine 2b are directly fed with a compressed air flow generated by an air compressor 6.

In the embodiment of the figures, the energy for actuating the air compressor 6 is directly taken up from the drive shaft 5.

This solution is preferred because it limits the costs and sizes of the propulsion system.

In the embodiment of the figures, the energy for actuating the air compressor 6 is directly taken up from the drive shaft 5.

Alternatively, the air compressor 6 may be actuated by an electric motor, such as a battery-operated electric motor, whose battery is recharged by an alternator actuated by the drive shaft 5.

If the number C of cylinders 33, 34 of the compressed-air engine 2b is equal to or greater than 2 a compressed-air distributor 7 is provided for sequentially distributing the compressed air flow to the cylinders 33, 34 of the compressed-air engine 2b.

In the preferred embodiment, the internal-combustion engine 2a is a four-stroke engine, i.e. with a cycle completed in four strokes of the pistons 41, 42, whereas the cycle of the compressed-air engine is completed in two piston strokes.

A tank 8 is also preferably provided, downstream from the air compressor 6 and upstream from the compressed-air distributor 7, for accumulating the pressurized air delivered by the compressor 6 and dampening pulsations and pressure variations of compressed air.

In one embodiment, the air compressor 6 is a positive-displacement compressor of the type having axial pistons driven by a tilting rotary table 66.

By changing the tilt of the rotary table 66, the flow rate and pressure of the outflowing compressed air may be adjusted.

A stationary body 61 accommodates a driving shaft 62 and a rotor 63 integral with the driving shaft 62, in which four cylindrical chambers 64a, 64b, 64c, 65d are formed with an axis substantially parallel to the axis of rotation of the driving shaft 62.

Four axial pistons 65a, 65b, 65c, 65d are housed in the four cylindrical chambers 64a, 64b, 64c, 64d, with one end abutting against a tilting table 66.

The axial pistons 65a, 65b, 65c, 65d are connected to the tilting table 66 by means of pins 67 that terminate in a ball joint 68 held within a seat 69 formed in the tilting table 66.

The rotation of the driving shaft 62 and the integral rotor 63 causes the reciprocating motion of the pistons 65a, 65b, 65c, 65d within their cylinders, thereby causing the intake and exhaust operation.

A peculiarity of the illustrated compressor is that the cylindrical chambers 64a,64b, 64c, 64d are of different sections (and volumes) and are connected in series with progressive volumes from the chamber with the maximum volume 64a to the chamber with the minimum volume 64d.

Thus, air is compressed progressively, in four successive steps, and reaches pressures in a range of 0.5-200 bar.

The embodiment of the figures includes an electronic control unit 10 which detects the operating state of the internal-combustion engine 2a and the compressed-air engine 2b (temperature, pressure, number of revolutions, etc.) to control the operation of the hybrid propulsion system and optimize consumption, torque, power and response.

Particularly, the electronic control unit 10 adjusts the tilt of the rotary table 66 of the compressor 6, to regulate the power of the compressed air delivered by the air compressor 6 as needed.

## Claims

1. A hybrid propulsion system, particularly for motor vehicles and boats, comprising
- an internal-combustion engine (2a) of the reciprocating type, having a number N of cylinders (31, 32) and a number N of pistons (41, 42);
- a compressed-air engine (2b) of the reciprocating type, having a number C of cylinders (33, 34) and a number C of pistons (43, 44);
- said compressed-air engine (2b) being in thermal connection with said internal-combustion engine (2a);
- a drive shaft (5), having said N pistons (41, 42) of said internal-combustion engine (2a) and said C pistons (43, 44) of said compressed-air engine (2b) connected thereto;
- an air compressor (6) adapted to generate a compressed air flow to be fed to said C cylinders (33, 34) of said compressed-air motor (2b).
wherein said internal-combustion engine (2a) and said compressed-air engine (2b) are designed for simultaneous operation.

2. A hybrid propulsion system as claimed in claim 1, wherein said air compressor (6) is directly driven by said drive shaft (5).

3. A hybrid propulsion system as claimed in claim 1 or 2, wherein the number C of cylinders (33, 34) of said compressed-air engine (2b) is equal to or greater than 2 and wherein a compressed-air distributor (7) is provided for sequentially distributing said compressed air flow to said cylinders (33, 34) of said compressed-air engine (2b).

4. A hybrid propulsion system as claimed in any preceding claim, wherein a tank (8) is provided downstream from said air compressor (6) for storing pressurized air.

5. A hybrid propulsion system as claimed in any claim from 2 to 4, wherein said air compressor (6) is connected to said shaft (5) via a rev limiter (9).

6. A hybrid propulsion system as claimed in any preceding claim, wherein said air compressor (6) is a positive-displacement compressor of the type having axial pistons (65a, 65b, 65c, 65d ) driven by a tilting rotary table (66).

7. A hybrid propulsion system as claimed in claim 6, wherein said positive-displacement compressor (6) comprises chambers (64a, 64b, 64c, 64d) of different sections, said chambers (64a, 64b, 64c, 64d) being connected in series with progressive volumes from the chamber with the largest volume (64a) to the chamber with the smallest volume (64d).
